# EUROPEAN PATENT APPLICATION

(11) **EP 1 566 305 A1**
(43) Date of publication of application: **24.08.2005**
(21) Application number: 04003749.1
(22) Date of filing: 19.02.2004
(51) Int. Cl.: B60K 37/02, B60R 11/02

(54) **Configurable vehicle multimedia system**

(71) Applicant: Harman/Becker Automotive Systems GmbH, 76307 Karlsbad (DE)
(72) Inventor: Rieger, Robby, 76307 Karlsbad (DE)
(74) Representative: Bertsch, Florian Oliver

(57) **Abstract**

A transportable multimedia system with a multimedia module receptor (102) that is able to accept modules that implement multimedia functions in addition to an internal control module (104) and an internal storage module (106).

## Description

### BACKGROUND OF THE INVENTION

### 1. Field of the Invention.

The invention relates to configurable multimedia systems and in particular, to modular multimedia systems that may be used in and out of vehicles.

### 2. Related Art.

Fixed multimedia systems used in vehicles often include a radio receiver, a navigation unit, a recorded medium playback unit, and a two-way communication device such as On-Star or a cellular telephone. More recently, video displays have become available enabling short message services and video playback within a vehicle. Such multimedia systems are integrated together within a single expensive device or groups of devices with separate interfaces that are hardwired or permanently installed within a vehicle. Thus, the known multimedia systems suffer from numerous limitations that include-cost of the system, lack of configurability and inefficient use of resources that includes displays, power supplies and human interfaces. Thus, there is a need in the art for a vehicle configurable multimedia system that overcomes the disadvantages of the prior art radio receivers.

### SUMMARY

This invention provides a multimedia system that is configurable as removable and replaceable modular units. The multimedia system may be used outside of a vehicle as an independent multimedia system or secured in a vehicle for vehicle use. The multimedia system includes a multimedia module receptor and removable and replaceable modules associated with various multimedia functions in addition to an internal control module and an internal storage module. The removable and replaceable modular components may include a radio receiver, a navigation system, media playback devices for audio and/or video data (e.g., CD DVD, etc.), a cellular telephone unit, a traffic report receiver.

Other systems, methods, features and advantages of the invention will be or will become apparent to one with skill in the art upon examination of the following figures and detailed description. It is intended that all such additional systems, methods, features and advantages be included within this description, be within the scope of the invention, and be protected by the accompanying claims.

### BRIEF DESCRIPTION OF THE FIGURES

The components in the figures are not necessarily to scale, emphasis instead being placed upon illustrating the principles of the invention. In the figures, like reference numerals designate corresponding parts throughout the different views.

FIG. 1 is a diagram of a multimedia module system.

FIG. 2 is a diagram of the multimedia module receptor of FIG. 1 without modules.

FIG. 3 is a diagram of the back of the multimedia module receptor of FIG. 2.

FIG. 4 is a backplane of the multimedia module receptor of FIG. 2.

FIG. 5 is a diagram of a control panel in combination with one multimedia module removed from the multimedia module system of FIG. 1.

FIG. 6 is a diagram of an internal multimedia module removed from the multimedia system of FIG. 1.

### DETAILED DESCRIPTION

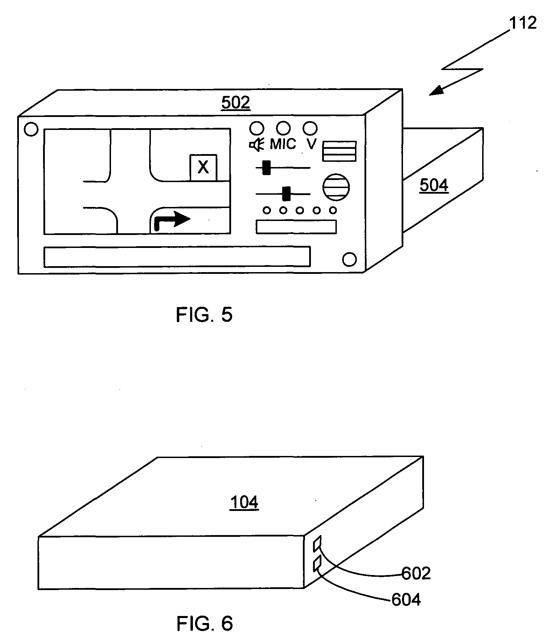

A diagram of a vehicle multimedia system 100 is shown. The multimedia system 100 is shown with a multimedia module receptor 102 internal modules 104, 106, 108, 110 and a control panel 112. The multimedia module receptor 102 has internal removable and replaceable modules that include an internal control module 104, an internal storage module 106, an internal interface module 108, an internal GSM module 110, and a navigation module 504, as can be seen in FIG. 5.

The internal control module 104 is a controller that connects to a backplane and the internal storage module 106. The internal control module 104 provides the general processing capabilities of the multimedia module receptor 102. The internal control module 104 may be responsible for identifying the other internal modules, such as multimedia modules 106, 108, 110, and navigation module 504, that are currently installed or in communication with the multimedia module receptor 102. The internal control module 104 may also provide centralized processing for the other modules installed in the multimedia module receptor 102 or in communication with the multimedia module receptor 102.

The internal control module 104 has a controller that executes instructions that are stored in permanent and rewriteable type memory. The instructions in permanent and rewriteable type memory may reside within the internal control module 104, in permanent and rewriteable type memory in other modules, or in a combination of permanent and rewriteable type memory in the internal control module 104 and other modules. The controller may be a microprocessor, such as a Pentium processor made by Intel, but in other implementations other microprocessors may be used such as microprocessor made by AMD, or Motorola. In other implementations, the controller may be an application specific integrated circuit (ASIC), discrete logic circuit implementing a state machine, an analog circuit for implementing a state machine, a combination of discrete logic circuit and analog circuit for implementing a state machine, or a digital signal processor (DSP).

The internal control module 104 may provide processing or servicing of input devices located in other modules, such as the navigation module 504. For example, the volume control on control panel 112 may send a volume control signal to the internal control module 104 that is communicated to the internal GSM module 110 to adjust the volume of the received call. In another example implementation, the internal control module may be in communication with the storage module 106 directly rather than over a shared bus.

The internal storage module 106 may be in communication to the internal control module 104 and the backplane. The internal storage module 106 may have digital storage media, such as random access memory (i.e. RAM, DRAM, SDRAM, EEPROM, NVRAM etc...), compact flash memory, hard disk drives. The internal storage module 106 stores program routines associated with various removable and replaceable modules and data. The data may include data for operating a navigation system, music data and system information. The internal storage module 106 may also provide storage of text or audio data such as traffic reports or short text messages received by wireless internal modules, such as internal GSM module 112.

An internal interface module 108 may have an antenna 114 that transmits and receives radio frequency. The internal interface module 108 permits radio-supported communication with external devices. Examples of such radio frequency communication include Bluetooth, family radio service (FRS), and wireless local area networks. In this way, the multimedia system 100 may be used as a relay station for information from other internal modules, such as relaying information (including audio) from a cellular telephone module like the internal GSM module 110 or from music devices that may include a compact disc or MP3 module. The antenna 114 is shown internal to the multimedia module receptor 102 and external to the internal interface module 108, but in another example implementation the antenna 114 may be a foil antenna within an internal module or an antenna connected externally to the multimedia module receptor 102. An example of such an external antenna is a vehicle AM/FM antenna that is commonly seen on passenger cars and trucks.

The internal GSM module 110 is a cellular telephone module and is shown with an internal antenna 116. The GSM module 110 enables cellular communication between users of the multimedia system 100 and a cellular network. The internal GSM module 110 may access speakers, microphones and controls of other internals modules, such as the navigation module 112. The GSM module 110 may be accessed via voice commands. In another example implementation, the internal GSM module 110 may have a remote hand-set that provides two-way communication between the hand-set, ear piece, and/or remote located keypad. For example, two-way communication may occur via a Bluetooth connection through an internal interface module 108 between the hand-set and the internal GSM module 110.

The control panel 112 is shown installed in the multimedia module receptor 102. The control panel 112 may have with a display screen 118, an external speaker connection 120, a microphone connection 122, a video input connection 124, a microphone 126, a speaker 128, a volume control 130, a tone control 132, LED display 134, a media slot 136, a disk slot 138, and securing devices 140 and 142. The display screen 118 may be a plasma display that is able to provide navigation information, disc playing information, media directory information, or other types of video or text data. The video or text data may be from other internal modules, such as short messages service (SMS) text from the internal GSM module 110, Internet information from a RF Internet provider or via a wireless modem module, or system information from the internal control module 104. In another example implementation, the display 118 may be a liquid crystal display, cathode ray tube, TFT display, or even a light emitting diode display. Further, the display 118 may be implemented as a touch screen display that allows configurable controls to be displayed and activated by touch.

The control panel 112 may provide connections for external connections, such as an external speaker connection 120, a microphone connection 122 and a video input connection 124. The microphone 126 and speaker 128 may be used has a hands-free device by the internal GSM module 110. The external speaker connection 120 in another implementation may be a connection for a hands-free device that incorporates both a microphone and speaker in the same connection for use by the internal GSM module 110. The microphone 126 may also be used to receive instructions for controlling the multimedia system 100 from a user via voice commands and speaker 128 may provide audio prompts to the user. The volume control 130 and tone control 132 may control the sound quality for internal and external speakers 120 and 128. A video connection 124 may be provided to enable remote terminals to be connected to the multimedia system 100.

LED displays 134 are light emitting diode devices that provide indications of the operational state of the multimedia system 100. One LED may indicate that the multimedia system 100 is on. Another LED may indicate that an internal module may be in operation, such as the internal GSM module 110 receiving a call or a voice message waiting to be picked up. Further, the LED displays 134 may be used to signal error conditions that may affect the multimedia system 100.

The control panel 112 may have a media reader 136 to read removable memory cards such as; compact flash cards, memory sticks and/or C-map cartridges. The media may contain digital sound files, such as WAV or MP3 files, graphical data, text data, and/or map or vector graphical data. Further, the media reader 136 may provide added data storage for use by the navigation module 112 and storage module 106.

The navigation module 504 may be connected to a GSP antenna (not shown) and provide GPS functionality. The GPS functionality may be used along with the mapping graphical data to provide chart plotter capability to the control panel 112. A user is then able to activate the navigation module 504, enter in destination information and receive interactive directions from the display 118 and the speaker 128.

The control panel 112 also may have a disk reader 138 such as a compact disc player. A compact disk is placed into the disk reader 138 and audio sound generated from the compact disk may be heard through the vehicle speaker if so connected to the multimedia module receptor 102 or the speaker 128. The disk reader 138 in the navigation module 112 may be accessed by at least the internal control module 104. In another implementation, the disk reader may be a digital videodisk player capable of playing both compact disc, video compact disk, digital video disk, data CD (R and/or RW), data DVDs (+R, +RW, -R, -RW) and MP3 disk. In yet another implementation, a disk reader 138 may incorporate a subset of the above disk formats.

The control panel 112 is securable in the multimedia module receptor 102 with securing devices 140 and 142 that may be securing screws. In other implementations, the securing devices may be screws, locking pins, bolts, friction devices or a combination of screws, locking pins, bolts, or friction devices.

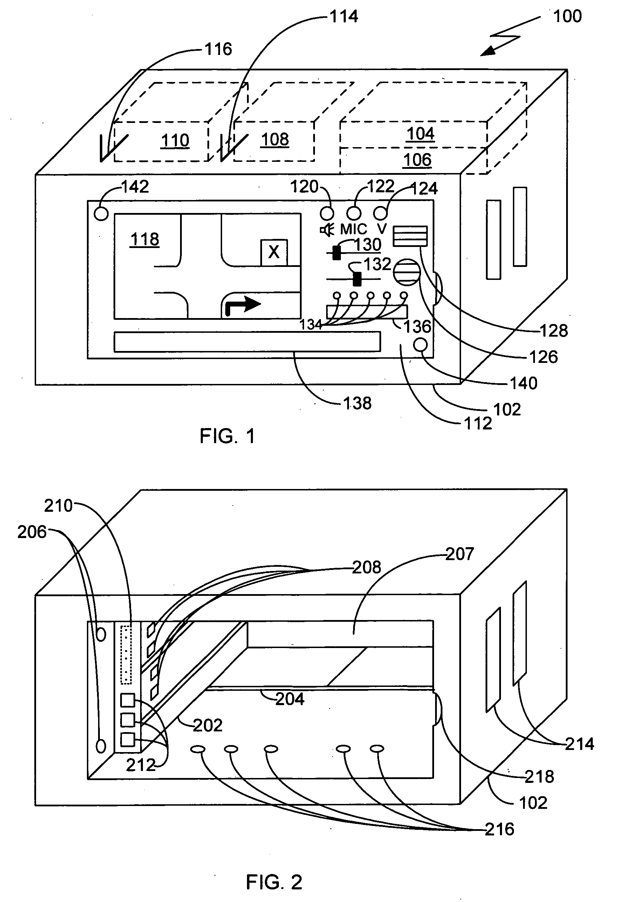

The control panel 112 is also a modular module and is attached to the module receptor 102 in a replaceable way. By exchanging the control panel different functionalities and different communication or multimedia modules can be supported, the control panels being adapted to each embodiment. This means that according to the multimedia modules incorporated in the different embodiments the replaceable control panel can be adjusted to different situations. In one embodiment the module receptor may only comprise modules with basic audio functions, so that a low cost control panel 112 could be used. This low cost control panel needs not to comprise the display 118 or any of the other features shown in FIG. 1. If the multimedia module receptor 102 does not contain a navigation module, the display elements and control buttons can be replaced by cheap devices such as LED (light emitting devices) etc. If a navigation module is present, the control panel 112 will be adapted accordingly, i.e. comprising more sophisticated display devices and more sophisticated control buttons in order to control the navigation module.

Turning to FIG. 2, a diagram of the multimedia module receptor 102 of FIG. 1 is shown. The multimedia module receptor 102 may have a bus control unit 202, internal module guides 204, module electrical contacts 206, backplane 207 and securing points 216. The bus control unit 202 may also have internal module guides 208, electrical connections 210 to the multimedia module receptor 102, and module electrical contacts 212.

The multimedia module receptor 102 may have one or more strap receptacle 214 for receiving a strap that may secure the multimedia module receptor 102 to a seat or other secure object or provide a strap for transporting the multimedia module receptor 102. A recessed grip 218 is also shown in FIG. 2 and aids in the removal of modules, such as the navigation module that may have a face flush with the multimedia module receptor 102.

The bus control unit 202 receives power from a power supply and is in communication with one or more electrical buses. The electrical buses may be on a backplane 207, an electrical path formed by the internal module contacts 208 and 212, or a combination of a backplane and electrical path formed by the internal module contacts 208 and 212.

The power supply (not shown) makes an electrical connection between the multimedia module receptor 102 and a 12-volt direct current power source. Examples of 12 volt direct current power sources include, but are not limited to; batteries, alternators and power converters, generators and power converters, and solar panels. In other embodiments, the power supply may be a 24-volt direct current power supply that connects to a 24-volt direct current power supply. In yet another embodiment, an AC power supply may be used that connected to common household electrical outlets, such as 110 volts in the United States. AC power supplies may also be adapted to receive AC voltage and convert the AC voltage to a lower DC voltage, such as 110 volts AC to 12-volt DC converters.

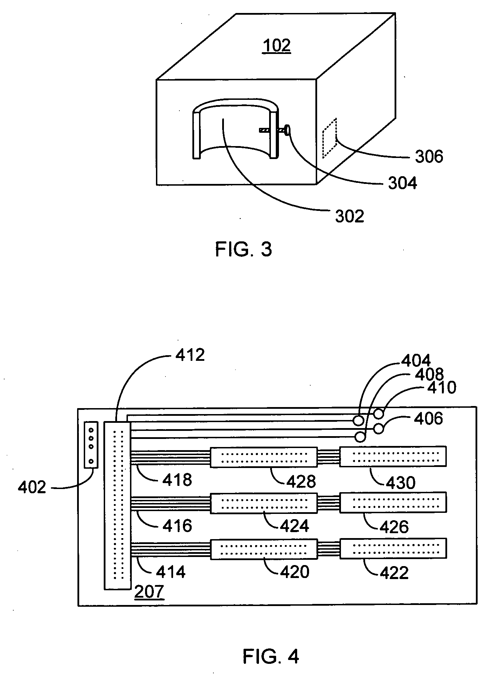

FIG. 3 is a rear view of the multimedia module receptor 102 is shown. The multimedia module receptor 102 has a clip 302 with a setscrew 304. The clip 302 is formed to attach to a headrest in vehicle. Once attached to the headrest, the setscrew 304 may be tightened resulting in a secure coupling of the multimedia module receptor 102 to the headrest. In other implementations, different securing devices other than setscrews may be used and the multimedia module receptor 102 may be secured to other places within a vehicle. Examples of other securing devices may include, but are not limited to spring pins, clamps, straps and buckles, Velcro, and suction cups.

An opening 306 in the multimedia module receptor 102 may be present that allows for a power cord connection to backplane 207. In other embodiments, a power source such as one or more batteries may be contained within the multimedia module receptor 102. In yet other implementations, an internal power source may be used along with a power cord for connection with the backplane.

A benefit of the multimedia system 100 is the ability to change the configuration of the multimedia system 100 by changing the multimedia modules within the multimedia module receptor 102. Further benefits of the multimedia system 100 also include the transportability of the multimedia module receptor 102 between vehicles and the ability to use the multimedia system 100 away of a vehicle. Users no longer have to invest in single unit multimedia systems that are dedicated to a single vehicle. Yet another advantage is the ability to install different modules and update the capabilities of the multimedia system 100 as multimedia technology and formats change.

Turning to FIG. 4, a backplane 207 of the multimedia module receptor 102 of FIG. 1 is shown. The backplane 207 is a printed circuit board with power connector 402, audio connectors 404, 406, 408, and 410, bus controller connector 412 connected to a plurality of shared electrical paths 414, 416 and 418 that also connect to a number of module bus connectors 420, 422, 424, 426, 428, and 430. The backplane 207 enables communication to occur between different multimedia modules over the plurality of shared electrical paths 414, 416 and 418. In addition to communication, the backplane 207 also may receive electrical power from the power connector 402 and provide electrical power to the bus controller connector 412. Electrical power may then be transferred to other multimedia modules by some of the plurality of shared electrical paths 414, 416 and 418. The backplane 207 may also have audio connections 404, 406, 408, and 410 that enable audio sound to be routed to external speakers. An example of such a bus configuration is a PCI computer bus that enables text, graphic, audio, electrical power, and video data to be shared among different devices on the PCI bus. Other types of buses that may be used in other implementations include ISA, PCI, Universal Serial Bus, MOST, IEEE-1443, and Small Computer Serial Interface (SCSI) to name but a few examples.

In FIG. 5 a diagram of the control panel 112 in connection to a navigation module removed from the multimedia module receptor 102 of FIG 1 is shown. The control panel 112 has a front portion 502. The front portion of the control panel fills the opening formed by the sides of the multimedia module receptor 102. The rear side of the front portion may have electrical contacts (not shown) that align with the electrical connections 210 and module electrical contacts 212 of the multimedia module receptor 102. The navigation module 504 is formed to extend to and make contact with backplane 207. Both the front portion 502 and the navigation module 504 may be enclosed in a metal housing to reduce electro-magnetic interference (EMI) transmissions.

The front portion of the control panel can be adapted to the modules attached to the back side of the control panel. If the user of the multimedia system prefers a multimedia system having high quality audio properties, the navigation module 504 could be replaced by a higher sophisticated audio module which provides high fidelity audio sound. In this case the front portion 502 would be adapted to the module attached to the back of the control panel.

In FIG. 6 a diagram of an internal control module 104 of FIG. 1 is shown. The internal control module 104 is shaped to fit within the multimedia module receptor 102 and may have module electrical contacts 602 and 604. The electrical contacts are arranged to align with electrical contacts on other modules or the bus control unit 202. The internal control module 104 is enclosed in a metal housing in order to reduce EMI transmission. In other implementations, the internal control module 104 may be enclosed in a plastic, polymer, ceramic, or a combination of materials that may include metal, plastic, polymer, or ceramic housing.

Other types of multimedia modules may be used with the multimedia module receptor 102 including modules to read and/or record magnetic media such as a cassette tape, modules to receive and decode television signals, satellite radio module, AM radio module, FM radio module, AM/FM radio module, On-Star module, personal digital assistant (PDA) module, and video game module. Modules may also be configured to communicate with external devices. Such external devices include a microphone, a cassette recorder, a compact disc player, a television receiver, an external antenna, and the like.

While various embodiments of the invention have been described, it will be apparent to those of ordinary skill in the art that many more embodiments and implementations are possible that are within the scope of this invention.

## Claims

1. A multimedia system, comprising:
a multimedia module receptor (102) capable of holding a plurality of multimedia modules; and
at least one internal control module (104) coupled to the plurality of the multimedia modules.

2. A multimedia system of claim 1, including:
a control panel (112) in the plurality of modules in communication with the internal control module (104); and
a plurality of controls visible on the control panel that communicate with the control module (104) that affects another of the plurality of modules.

3. A multimedia system of claim 1 or 2, including:
a cellular telephone module in the plurality of modules in communication with the internal control module (104); and
a microphone in communication with the cellular telephone module that receives voice instructions processed by the internal control module (104).

4. The multimedia system according to any of the preceding claims, comprising an internal storage module (106) that is accessible by the internal control module (104) that has a plurality of data that include a plurality of instructions for the internal control module (104) and data for use by another module in the plurality of modules.

5. The multimedia system of claim 4, where the internal storage module has a digital storage media.

6. The multimedia system according to any of the preceding claims, where the multimedia module receptor is transportable.

7. The multimedia system according to any of the preceding claims, where the multimedia module receptor (102) further include a backplane that provides a plurality electrical paths between the internal control module (104) and more than two other multimedia modules in the plurality of multimedia modules.

8. The multimedia system according to any of the preceding claims, where the multimedia module receptor further includes a power supply adapted to receive twelve volt direct current.

9. The multimedia system according to any of the preceding claims, wherein the control panel (112) is a modular control panel and is detachably arranged in the multimedia module receptor (102) and is configured in dependence of the multimedia modules provided in the module receptor (102).

10. A multimedia module receptor, comprising:
a power supply;
a backplane (207) with more than one module connection within the multimedia module receptors (102) connected to the power supply;
an internal control module (104) attached to one of the module connection; and
another multimedia module attached to another module connection where the internal control module (104) is accessed by a user interface located on the other multimedia module.

11. The multimedia module receptor of claim 10, further includes a clip (302) on a back of the multimedia module receptor.

12. The multimedia module receptor of claim 10 or 11, where the other multimedia module includes a securing device that secures the other multimedia module in the multimedia module receptor (102).

13. The multimedia module receptor according to any of claims 9 to 12, including a wireless internal module attached to a third connection on the backplane (207) and controllable from the user interface located on the other multimedia module.

14. The multimedia module receptor of claim 13, where the wireless internal module includes a wireless hand-set that is able access the wireless internal module.

15. The multimedia module receptor according to any of claims 9 to 14, including a third internal module attached to a third connection on the backplane and controllable from the user interface located on the other multimedia module.

16. The multimedia module receptor of claim 15, where the third internal module is a module that produces audio sound from a prerecorded source.

17. The multimedia module receptor of claim 15 or 16, where the other multimedia module is a navigation module having a display.

18. A multimedia system, comprising:
an internal control module (104);
a control panel (112);
a wireless module; and
a multimedia module receptor (102) with a backplane (207) that connects the internal control module (104), the control panel (112) and the wireless module.

19. The multimedia system of claim 18, where the control panel (112) further includes a user interface that communicates with the internal control module (104) and the wireless module.

20. The multimedia system of claim 19, where the user interface is a touch screen display located in the control panel.

21. The multimedia system according to any of claims 18 to 20, where the control panel further includes:
a microphone that receives a voice signal that is processed by the wireless module; and
a speaker to receive audio data from the wireless module.

22. The multimedia system of claim 21, where the voice signal is a voice command that is acted on by the wireless module.
